(19) Europäisches Patentamt
European Patent Office
Office européen des brevets

(11) **EP 3 107 174 B1**

(12) **EUROPÄISCHE PATENTSCHRIFT**

(45) Veröffentlichungstag und Bekanntmachung des Hinweises auf die Patenterteilung:
**29.07.2020   Patentblatt 2020/31**

(21) Anmeldenummer: **15172838.3**

(22) Anmeldetag: **19.06.2015**

(51) Int Cl.:
*H02J 3/00* (2006.01)      *H02J 13/00* (2006.01)
*H02H 1/00* (2006.01)      *G06N 3/02* (2006.01)

(54) **VERFAHREN, STEUEREINRICHTUNG UND SYSTEM ZUM BETREIBEN EINES TEILNETZES EINES ENERGIEVERSORGUNGSNETZES**

METHOD, CONTROL DEVICE AND SYSTEM FOR OPERATING A SUB- NETWORK OF AN ENERGY SUPPLY NETWORK

PROCÉDÉ, DISPOSITIF DE COMMANDE ET SYSTÈME DE FONCTIONNEMENT D'UN SOUS-RÉSEAU D'UN RÉSEAU DE DISTRIBUTION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.12.2016   Patentblatt 2016/51**

(73) Patentinhaber: **Siemens Aktiengesellschaft 80333 München (DE)**

(72) Erfinder:
• **Fröhner, Wiebke**
  **92224 Amberg (DE)**
• **Werner, Thomas**
  **91126 Rednitzhembach (DE)**

(56) Entgegenhaltungen:
**EP-A1- 2 521 237      US-A1- 2004 246 643
US-A1- 2010 023 174**

EP 3 107 174 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Betreiben eines elektrischen Energieversorgungsnetzes mit einem elektrische Lasten und/oder elektrische Quellen aufweisenden Teilnetz, wobei dem Teilnetz eine dezentrale Steuereinrichtung zugeordnet ist, mittels der unter Verwendung von Zustandswerten, die einen aktuellen elektrischen Betriebszustand des Teilnetzes angeben, Steuersignale erzeugt werden, die zur Steuerung von Komponenten des Teilnetzes herangezogen werden. Dabei umfasst die dezentrale Steuereinrichtung eine Zustandsschätzeinrichtung, mittels der die Zustandswerte unter Verwendung von der Zustandsschätzeinrichtung zugeführten Eingangssignalen geschätzt werden, und eine Auswerteinrichtung umfasst, mittels der die Zustandswerte daraufhin überprüft werden, ob sie auf einen ungewünschten elektrischen Betriebszustand des Teilnetzes des Energieversorgungsnetzes hinweisen, und ein Steuersignal erzeugt wird, falls die Zustandswerte auf einen ungewünschten elektrischen Betriebszustand hinweisen. Die Erfindung betrifft auch eine Steuereinrichtung zum Betreiben eines Teilnetzes eines Energieversorgungsnetzes sowie ein System zum Betreiben eines ein solches Teilnetz aufweisenden Energieversorgungsnetzes.

Eine der wichtigsten Aufgaben von Betreibern von Energieversorgungsnetzen ist die Sicherung und Verbesserung der Versorgungszuverlässigkeit. Energieversorgungsnetze werden dabei üblicherweise in mehrere Spannungsebenen unterteilt, beispielsweise in eine Hochspannungsebene (über ca. 30kV), über die eine Stromübertragung über weite Strecken stattfindet, eine Mittelspannungsebene (ca. 1 kV bis 30kV), zur Verteilung elektrischer Energie und zum Anschluss von Industriebetrieben, und eine Niederspannungsebene (unter 1kV) zur Verteilung der elektrischen Energie an den Endverbraucher. Dabei werden die Energieversorgungsnetze der verschiedenen Spannungsebenen nicht zwingend von demselben Betreiber betrieben.
Während üblicherweise auf der Hoch- und der Mittelspannungsebene liegende Teilnetze eines Energieversorgungsnetzes mittels Automatisierungsanlagen überwacht, gesteuert und geschützt werden, findet man in Niederspannungs-Teilnetzen bisher kein oder nur ein geringes Maß an Automatisierung vor. Der unidirektionale Energiefluss im Energieversorgungsnetz vom zentralen Erzeuger zu den verteilten Verbrauchern hat bisher eine Automatisierung, z.B. ein Lastmanagement, in den für die Verteilung benötigten Niederspannungsteilnetzen im Allgemeinen nicht erfordert.

Diese zunehmende dezentrale Einspeisung auf der Niederspannungsebene und die Möglichkeiten, elektrische Lasten zentral zu steuern, veranlassen die Betreiber solcher Niederspannungs-Teilnetze in verstärkter Weise eine Automatisierung vorzusehen. Mit der steigenden Zahl der kleinen und mittleren Erzeuger (Quellen) von erneuerbaren Energien, z. B. Solarstrom, Strom aus Biomassekraftwerken oder Windkraftanlagen, kommt es nämlich vermehrt zu einem bidirektionalen Energiefluss im Niederspannungs-Teilnetz, wodurch Spannungsschwankungen hervorgerufen werden können. Solche immer häufiger auftretenden Spannungsschwankungen zwingen die Netzbetreiber, hier entgegenzuwirken und regelnd bzw. steuernd einzugreifen. Um das Spannungsniveau in Niederspannungs-Teilnetzen innerhalb der vorgeschriebenen Spannungsbänder halten zu können, setzen Netzbetreiber verstärkt Verfahren zur Spannungsblindleistungsoptimierung (Volt/Var Control) ein, die zum Beispiel auf regelbare Transformatoren oder Kondensatorbatterien zurückgreifen.

Die steuernden bzw. regelnden Eingriffe in den Netzbetrieb erfordern grundsätzlich zunächst eine gute Kenntnis des aktuellen elektrischen Betriebszustandes, insbesondere der Spannungen und Ströme, des Energieversorgungsnetzes bzw. des zu betrachtenden Teilnetzes. Nur wenn der Betreiber den Betriebszustand seines Netzes kennt, kann er regelnd oder steuernd auf die jeweiligen Ströme, Spannungen oder Leistungsflüsse einwirken. Da Ströme und Spannungen in einem Energieversorgungsnetz üblicherweise nicht an jeder Position gemessen werden können, führt der Netzbetreiber üblicherweise eine Schätzung des elektrischen Betriebszustandes des Energieversorgungsnetzes durch. Diese wird mit sogenannten "Zustandsschätzern" ("State Estimator") durchgeführt und liefert eine konsistente Beschreibung des Betriebszustandes eines Energieversorgungsnetzes, der für weitere mathematische Berechnungen, z.B. für die Spannungsblindleistungsoptimierung, genutzt werden kann.

Die Zustandsschätzung der elektrischen Energieversorgungsnetze findet aktuell typischerweise in Netzleitstellen statt. Dazu werden Datenmodelle des Netzes und die aktuelle Zustandsinformationen, wie z.B. vorhandene Messwerte und Schaltzustände, verwendet. Diese Verfahren sind sehr aufwendig und benötigen im Allgemeinen zahlreiche Messinformationen, die an einer Vielzahl von Messstellen gewonnen werden müssen. Der Einbau und die Wartung einer großen Anzahl von Sensoren sind mit hohen Anschaffungs- und Betriebskosten verbunden. Zustandsschätzer und Verfahren zum Schätzen von Betriebszuständen von Energieversorgungsetzen sind z.B. aus der EP 2 521 237 A1 oder dem Aufsatz "Advantages of Power System State Estimation Using Phasor Measurement Units"; M. Hurtgen, J.-C. Maun; 16th Power Systems Computation Conference (PSCC 2008), bekannt.

Aufgrund der in Niederspannungs-Teilnetzen vorzusehenden immensen Anzahl von Sensoren und den damit verbundenen Kosten sowie den großen zwischen dem Niederspannungs-Teilnetz und der Netzleitstelle zu übertragenden Datenmengen, werden solche Zustandsschätzverfahren bisher fast ausschließlich für Hoch- und Mittelspannungs-Teilnetze eingesetzt; eine Verwendung in Niederspannungs-Teilnetzen findet üblicherweise nicht statt.

In aktuellen Forschungsarbeiten werden mittlerweile erste Ansätze für die dezentrale Netzzustands-Schätzungen diskutiert. Beispielsweise ist ein Verfahren der eingangs genannten Art aus dem Aufsatz "LV-Grid Automation System - A Technology Review"; C. Oerter, N. Neusel-Lange; 2014 IEEE PES General Meeting, beschrieben.

Bei dem bekannten Verfahren wird in einem dem Niederspannungs-Teilnetz zugeordneten Automatisierungsgerät eine Netzzustandsschätzung durchgeführt, die einem vereinfachten Zustandsschätzer eines Netzleitsystems entspricht. Dazu verwendet das Automatisierungsgerät eine Modellbeschreibung des elektrischen Teilnetzes, bereitet entsprechende mathematische Gleichungen auf und nutzt die vorhandenen Messinformationen aus dem Teilnetz, um eine Schätzung des Betriebszustands zu berechnen.

Das beschriebene Verfahren ist jedoch vergleichsweise aufwendig und stellt einerseits hohe technische Anforderungen an ein die Zustandsschätzung durchführendes Automatisierungsgerät und erfordert andererseits das Vorsehen einer Messtechnik im Niederspannungs-Teilnetz, was wie oben erläutert, vergleichsweise teuer ist. Zudem wird eine dauerhafte Übertragung von Messwerten in dem Niederspannungs-Teilnetz erforderlich. Sofern der Algorithmus zudem auf von einer übergeordneten Netzleitstelle bereitgestellte Mess- und/oder Netztopologiedaten zurückgreift, wird außerdem eine Datenübertragungsschnittstelle benötigt, die in diesem Umfeld üblicherweise nicht genormt ist und daher oft auf proprietäre Lösungen der Netzbetreiber zurückgreift.

Der Erfindung liegt daher die Aufgabe zugrunde, ein Verfahren der eingangs genannten Art anzugeben, bei dem eine Zustandsschätzung vergleichsweise einfach und ohne die Notwendigkeit einer aufwendigen, in dem Teilnetz vorzusehenden Messtechnik durchgeführt werden kann. Der Erfindung liegt außerdem die Aufgabe zugrunde, eine entsprechende Steuereinrichtung sowie ein System zum Betreiben eines Teilnetzes eines Energieversorgungsnetzes anzugeben.

Hinsichtlich des Verfahrens wird diese Aufgabe erfindungsgemäß durch ein Verfahren nach Anspruch 1 gelöst.

Erfindungsgemäß wird somit vorgeschlagen, eine dezentrale Zustandsschätzung des Betriebszustands eines Teilnetzes, z.B. eines Niederspannungs-Teilnetzes eines Energieversorgungsnetzes, unter Verwendung eines künstlichen neuronalen Netzes vorzunehmen.

Künstliche neuronale Netze sind informationstechnische Strukturen, die einen funktionalen Zusammenhang zwischen Eingangssignalen (z.B. einem Eingangsvektor E) und Ausgangssignalen (z.B. einem Ausgangsvektor A) "lernen" können:

$$\underline{A} \;=\; f(\underline{E}).$$

Ein künstliches neuronales Netz besteht dabei aus mehreren Neuronen, die untereinander verbunden sind. Die Neuronen sind üblicherweise in mehreren Schichten angeordnet. Eine erste Schicht wird dabei durch eine Eingangsschicht von Neuronen gebildet, an der die einzelnen Elemente der Eingangssignale angelegt werden; jedem Neuron der Eingangsschicht wird dabei üblicherweise ein Element des Eingangssignals zugeführt. Ausgangsseitig weist das künstliche neuronale Netz eine Ausgangsschicht auf, deren Neuronen jeweils einzelne Elemente der Ausgangssignale repräsentieren. Zwischen der Eingangs- und der Ausgangsschicht liegen eine oder mehrere Schichten sogenannter "versteckter Neuronen" ("Hidden Layers" bzw. "Hidden Neurons"). Die Neuronen der Eingangsschicht sind mit allen oder ausgesuchten Neuronen der ersten Schicht versteckter Neuronen verbunden. Diese sind wiederum mit allen oder ausgewählten Neuronen einer etwaigen zweiten Schicht versteckter Neuronen verbunden, usw.. Die letzte Schicht versteckter Neuronen ist schließlich mit den Neuronen der Ausgangsschicht verbunden. Das Verhalten eines neuronalen Netzes und damit die Antwort der Neuronen der Ausgangsschicht auch an die Neuronen der Eingangsschicht angelegte Signale wird durch Trainingsparameter definiert. Diese sind beispielsweise Schwellenwerte, ab denen ein Neuron ein Signal an ein nachfolgendes Neuron abgibt, und/oder Gewichtungsfaktoren für die Wahrscheinlichkeit einer Signalübertragung zwischen zwei aufeinanderfolgenden Neuronen.

Zum Anlernen (auch als "Trainieren" bezeichnet) existieren generell mehrere dem Fachmann an sich bekannte Methoden. Gemäß der sogenannten "Multilayer-Perceptron" Methode wird dem neuronalen Netz zunächst eine Reihe von Eingangsvektoren und Ausgangsvektoren, von denen bekannt ist, dass sie zu den Eingangsvektoren passen, präsentiert. Diese Ausgangsvektoren wurden entweder mit einem externen Verfahren berechnet oder sie stammen aus Messungen am realen technischen Objekt. Die von dem neuronalen Netz berechneten Ausgangsvektoren werden mit den vorgegebenen Ausgangsvektoren verglichen. Die Abweichungen zwischen den berechneten und den erwarteten Werten werden ausgewertet und genutzt, um die Parameter des Berechnungsalgorithmus des neuronalen Netzes zu modifizieren (auch als "Backpropagation" bezeichnet). Das Training ist beendet, sobald die Berechnungsergebnisse des neuronalen Netzes hinreichend genau mit den erwarteten Werten übereinstimmen.

Durch den Einsatz eines künstlichen neuronalen Netzes, das darauf trainiert wurde, aus solchen Eingangssignalen (Eingangsvektor), die einen in dem Bereich des Teilnetzes vorliegenden Umgebungszustand und/oder einen elektrischen Zustand des Teilnetzes an zumindest einer dem Teilnetz zugeordneten Messstelle angeben, entsprechende Zustandswerte (Ausgangsvektor) zu ermitteln, die den elektrischen Betriebszustand des Teilnetzes angeben, kann einerseits auf eine aufwendige Messtechnik in dem Teilnetz weitgehend verzichtet werden. Andererseits müssen in der Steuereinrichtung auch keine aufwendigen Algorithmen durchgeführt werden; eine Implementierung eines einfachen künstlichen neuronalen Netzes verlangt einem Prozessor heutzutage keine besonderen Anforderungen mehr ab.

Bei dem erfindungsgemäßen Verfahren wird die Erkenntnis genutzt, dass sich der Betriebszustand des Teilnetzes hinreichend genau aus wenigen Eingangssignalen ermitteln lässt, die darüber hinaus auch "netzfremde" Signale sein können, also solche Signale, die nicht durch Erfassung elektrischer Messgrößen an Messstellen in dem Teilnetz ermittelt werden. Vielmehr können nämlich auch solche Eingangssignale verwendet werden, die dazu geeignet sind, Größen zu beschreiben, die den Betriebszustand des Teilnetzes beeinflussen. Zusätzlich können natürlich auch elektrische Messgrößen aus dem Teilnetz zur Verwendung kommen.

Konkret kann beispielsweise vorgesehen sein, dass als Eingangssignale ein oder mehrere der folgenden Signale verwendet werden:

- ein das aktuelle Wetter im Bereich des Teilnetzes angebendes Wettersignal; ein solches Wettersignal kann beispielsweise Informationen über Sonneneinstrahlung (Helligkeit und Einstrahlungswinkel), Windrichtung, Windgeschwindigkeit, Umgebungstemperatur etc. umfassen;

- ein die aktuelle Uhrzeit angebendes Zeitsignal;

- ein die Art des aktuellen Tages angebendes Tagesartsignal; ein solches Tagesartsignal kann beispielsweise angeben, ob es sich um einen Wochentag, einen Samstag, einen Sonntag, einen Feiertag, einen Arbeitstag etc. handelt;

- ein einen oder mehrere gemessene elektrische Parameter im Teilnetz angebendes Messsignal; ein solches Messsignal kann beispielsweise an einer Verbindungsstelle des Teilnetzes mit einem anderen Teilnetz (z.B. eine Ortsnetzstation, die an der Verbindungsstelle eines Mittel- und eines Niederspannungs-Teilnetzes liegt) erfasste Ströme und/oder Spannungen umfassen;

- ein einen Schaltzustand von Schalteinrichtungen im Teilnetz angebendes Schaltzustandssignal; ein solches Schaltzustandssignal kann beispielsweise angeben, ob eine manuell oder automatisch bedienbare Schalteinrichtung oder eine Sicherung den Strom leitet oder unterbricht.

Die genannten Signale sind für sich genommen oder in Kombination dazu geeignet, Größen zu beschreiben, die den Betriebszustand, insbesondere das Verhalten der Lasten und/oder der Quellen, des Teilnetzes beeinflussen. Die Signale können dabei lokal im Bereich des Teilnetzes (z.B. mittels entsprechender Sensoren einer Ortsnetzstation) aufgenommen und/oder von externen Systemen (z.B. Wetterdienste) bezogen werden.

Befinden sich beispielsweise regenerative Energieerzeuger in Form von Photovoltaikanlagen oder Windkraftanlagen in dem Teilnetz, ist deren Einspeisung elektrischer Energie abhängig vom im Bereich des Teilnetzes herrschenden Wetter, beispielsweise Sonneneinstrahlung (für Photovoltaik) und Windrichtung und Windstärke (für Windkraftanlagen). Diese Informationen können der Steuereinrichtung als Wettersignal zugeführt werden. Das neuronale Netz ist in dem Fall anhand von vergangenen Wetteraufzeichnungen und Einspeisemodellen bzw. Messungen darauf trainiert worden, unter Verwendung des Eingangssignals in Form des Wettersignals die durch die Einspeisung beeinflussten Zustandswerten des Teilnetzes zu ermitteln.

Daneben existieren weitere Einflüsse. Beispielsweise hängt das Lastverhalten signifikant von der Tagesart ab. So liegen Lastspitzen an normalen Wochentagen (Arbeitstage) in bestimmten, relativ genau vorhersagbaren Zeitfenstern, während sie am Wochenende durch ein verschiedenes Verbraucherverhalten in anderen Zeitfenstern liegen. Auch auf diesen Zusammenhang kann das neuronale Netz trainiert sein, so dass es unter Verwendung entsprechender Uhrzeit- und Tagesartsignale eine Abschätzung der Lastsituation im Teilnetz vornehmen kann.

Mittels an der Verbindungsstelle des Teilnetzes mit einem anderen Teilnetz erfasster Ströme und oder Spannungen kann ebenfalls eine Abschätzung erfolgen. Dadurch dass hierfür lediglich eine Messstelle erforderlich ist, wird kein komplexes Messsystem im Teilnetz benötigt. Alternativ oder zusätzlich zur Messung an der Verbindungsstelle können natürlich auch andere Messstellen in dem Teilnetz herangezogen werden, um elektrische Parameter wie Strom und Spannung zu erfassen und ein entsprechendes Messsignal zu bilden. Hierfür eignen sich insbesondere bereits vorhandene Sensoren, z.B. sogenannte Smart Meter, die entsprechende Messungen im Bereich der jeweiligen mit dem Teilnetz verbundenen Endverbraucher vornehmen. Das neuronale Netz ist in diesem Fall darauf trainiert, aus einem oder mehreren Messsignalen die entsprechenden Zustandswerte abzuschätzen.

Durch die Verwendung von Informationen über die Schaltzustände von Schalteinrichtungen (inkl. Sicherungen) können Einflüsse durch unterschiedliche Lastflüsse im Teilnetz berücksichtigt werden. Außerdem können Abschaltungen bzw. Zuschaltungen einzelner Abschnitte des Teilnetzes in die Abschätzung einfließen.

Eine besonders gute Abschätzung kann natürlich dann getroffen werden, wenn mehrere der beschriebenen Signale als Eingangssignal miteinander kombiniert werden (z.B. ein Wettersignal und ein Tagesartsignal). Hierdurch lassen sich verschiedene Einflüsse auf Lasten und Quellen in dem Teilnetz berücksichtigen. Die Auswahl der jeweils geeigneten Signale wird sich von Teilnetz zu Teilnetz unterscheiden und ist z.B. von der Art und Menge der Quellen und Lasten sowie dem Vorhandensein etwaiger Messsensoren im abhängig.

Zusammengefasst wird somit vorgeschlagen, eine dezentrale Zustandsschätzung des Betriebszustands des betrachteten Teilnetzes durchzuführen. Die Zustandsschätzung verwendet darüber hinaus ein künstliches neuronales Netz anstelle eines Zustandsschätzers in Form eines herkömmlichen State-Estimators, der komplexe Algorithmen anhand einer Vielzahl von Messungen durchführt. Das neuronale Netz ist dazu trainiert, zu Eingangssignalen, die Größen beschreiben, die Einfluss auf das Betriebsverhalten des Teilnetzes haben, Ausgangssignale in Form von Zustandswerten zu bilden, die den Betriebszustand des Teilnetzes beschreiben. Als Zustandswerte können insbesondere an den Knoten des Teilnetzes aktuell vorliegende Knotenspannungen und/oder auf den Leitungen des Teilnetzes vorliegende Leitungsströme ermittelt werden. Die Zustandswerte können daraufhin von der Auswerteinrichtung für andere Applikationen genutzt werden, um Maßnahmen gegen ungewünschte Betriebszustände, z.B. Spannungsschwankungen, zu treffen. Solche Maßnahmen können unter anderem in der Regelung von regelbaren Transformatoren und/oder der Zu- oder Abschaltung von Kondensatorbatterien bestehen, um eine Spannungsblindleistungskompensation zu betreiben.

Eine vorteilhafte Ausführungsform des erfindungsgemäßen Verfahrens sieht vor, dass zum Trainieren des künstlichen neuronalen Netzes ein zweites künstliches neuronales Netz, dessen Struktur mit derjenigen des künstlichen neuronalen Netzes der Zustandsschätzeinrichtung übereinstimmt, in einer zentralen Datenverarbeitungseinrichtung unter Verwendung von historischen Eingangssignalen und zugehörigen Zustandswerten unter Bildung von Trainingsparametern angelernt wird, die das Verhalten des zweiten künstlichen neuronalen Netzes bestimmen; und die Trainingsparameter an das künstliche neuronale Netz der Zustandsschätzeinrichtung übermittelt und von diesem übernommen werden.

Der besondere Vorteil dieser Ausführungsform besteht darin, dass der Trainingsvorgang nicht von der Steuereinrichtung selbst vorgenommen werden muss, sondern von einer davon verschiedenen Datenverarbeitungseinrichtung, die leistungsfähiger sein kann als die Steuereinrichtung selbst, durchgeführt wird. Bei dieser Datenverarbeitungseinrichtung kann es sich zum Beispiel um einen Rechner einer zentralen Netzleitstelle oder um einen Cloudservice handeln, der von einem entsprechenden Dienstleister angeboten wird.

Gemäß dieser Ausführungsform wird somit zwischen den beiden folgenden Komponenten unterschieden: Die bereits erläuterte dezentrale Steuereinrichtung führt wie oben beschrieben mittels einer ein künstliches neuronales Netz umfassenden Zustandsschätzeinrichtung im "Normalbetrieb" des Teilnetzes eine Schätzung der den Betriebszustand des Teilnetzes angebenden Zustandswerte durch. Es können mehrere solcher Steuereinrichtungen existieren, wobei jeweils einem Teilnetz eine Steuereinrichtung zugeordnet sein kann. Daneben existiert eine zentrale Datenverarbeitungseinrichtung, bei der es sich um einen einzelnen Rechner oder um eine lokale oder verteilte Ansammlung mehrerer Rechner bzw. ein Rechnersystem handeln kann. Die zentrale Datenverarbeitungseinrichtung wird zum Training des neuronalen Netzes verwendet.

Dazu ist auf der zentralen Datenverarbeitungseinrichtung ebenfalls ein künstliches neuronales Netz ("zweites neuronales Netz") implementiert, dessen Struktur mit der Struktur des künstlichen neuronalen Netzes in der Zustandsschätzeinrichtung der dezentralen Steuereinrichtung übereinstimmt. Dieses zweite neuronale Netz wird mit Hilfe einer Netzsimulation trainiert. Die dabei erzeugten Trainingsparameter, z.B. Schwellenwerte der einzelnen Neuronen und/oder Gewichtungsfaktoren für Verbindungen zwischen einzelnen Neuronen, werden daraufhin auf das neuronale Netz der dezentralen Steuereinrichtung übertragen.

Konkret erfolgt das Training beispielsweise wie nachfolgend erläutert. Die zentrale Datenverarbeitungseinrichtung erzeugt wie erwähnt zunächst Trainingsparameter für das strukturgleiche zweite neuronale Netz. Dazu verwendet es eine Reihe von im Umfeld der Netzsimulation und Netzberechnung üblichen Berechnungsprogrammen. Generell dienen solche Berechnungsprogramme zur Prognose des Verhaltens von Lasten und Quellen in dem Teilnetz. Konkret können diese Berechnungsprogramme beispielsweise ein Programm umfassen, das auf Basis von Wetterinformationen ("Wettersignale") und Tagescharakteristiken ("Tagesartsignale") eine Prognose der Lasten an den Entnahmestellen des Teilnetzes berechnet. Daneben kann z.B. ein Programm eingesetzt werden, das ebenfalls auf Basis von Wetterinformationen und Tagescharaktistiken (z.B. hinsichtlich Kraft-Wärme-Kopplungsanlagen) eine Prognose der Einspeisungen der dezentralen Erzeuger (Quellen) im Teilnetz berechnet. In einer Datenbank können zudem typische Lastverläufe (Lastprofile) einzelner Lasten oder Gruppen von Lasten bereitgestellt werden, auf deren Grundlage ebenfalls eine Lastprognose in Abhängigkeit von Uhrzeit und Tagesart erfolgen kann. Außerdem kann z.B. ein Zustandsschätzer ausgeführt werden, der für das Teilnetz mit den oben genannten Prognosen und ggf. vorhandenen Messwerten elektrischer Parameter (z.B. Ströme, Spannungen) aus dem Teilnetz die Lastflüsse und Knotenspannungen im Teilnetz berechnet. Der Zustandsschätzer kann dabei zusätzliche Informationen über die Topologie und jeweils zu den verwendeten Prognosezeiträumen passende Schaltzustände des Teilnetzes aus anderen Systemen, z.B. einem Netzleitsystemen heranziehen.

Darüber hinaus weist die zentrale Datenverarbeitungseinrichtung ein Archivsystem auf, welches die zur Durchführung der Abschätzung verwendeten Eingangssignale in Form digitaler Datensätze speichert und bereitstellt. Das Archivsystem kann z.B. historische Wetterinformationen, Schaltzustände und/oder gemessene elektrische Parameter aus dem Teilnetz bereitstellen. Diese sind nach Uhrzeiten und Tagesarten klassifiziert, so dass eine zeitgenaue Auswertung erfolgen kann.

Im Gegensatz zu einem den Netzbetrieb steuernden Netzleitsystem müssen die oben genannten Berechnungsprogramme zum Training des neuronalen Netzes nicht echtzeitfähig sein. Ihre Aufgabe besteht lediglich darin, auf der Basis der von dem Archivsystem bereitgestellten Eingangssignale (z.B. archivierten Wetterinformationen und Messwerten elektrischer Parameter) die Trainingsparameter für das neuronale Netze zu berechnen. Dazu werden für jedes zu betrachtende Teilnetz konkret die folgenden Schritte durchlaufen:

- Auswahl eine Betrachtungszeitraums (z.B. ein bestimmter Tag oder eine bestimmte Zeitspanne innerhalb eines Tages) aus dem Archivsystem.

- Berechnung der Verläufe elektrischer Lasten in dem fraglichen Teilnetz mit Hilfe der für den ausgewählten Betrachtungszeitraum und das fragliche Teilnetz archivierten Eingangssignale (z.B. Wetterinformation, Messwerte etc.).

- Berechnung der Erzeugungen elektrischer Energie durch Quellen in dem fraglichen Teilnetz mit Hilfe der für den ausgewählten Betrachtungszeitraum und das fragliche Teilnetz archivierten Eingangssignale (z.B. Wetterinformation, Messwerte etc.).

- Berechnung des Lastflusses in dem fraglichen Teilnetz durch den Zustandsschätzer mit Hilfe der in den vorhergehenden

Schritten berechneten Ergebnisse. Dabei können auch archivierte Messwerte elektrischer Parameter und Informationen über die offene/geschlossene Trennstellen ("Schaltzustandssignale") in dem fraglichen Teilnetz herangezogen werden.

Diese Schritte werden für jedes Teilnetz für mehrere Betrachtungszeiträume durchlaufen. Als Ergebnis dieser Durchläufe liegt eine Sammlung von Daten vor, die aus Eingangssignalen und dazu passenden Ausgangssignalen (Zustandswerten) bestehen.

Mit diesen Daten wird zunächst das zweite künstliche neuronale Netz trainiert, das auf der zentralen Datenverarbeitungseinrichtung implementiert ist. Nachdem das Training dieses zweiten neuronalen Netzes abgeschlossen ist, liegen die Trainingsparameter, z.B. Schwellenwert und/oder eine Matrix von Gewichtungsfaktoren des zweiten künstlichen neuronalen Netzes fest. Diese Trainingsparameter werden von der zentralen Datenverarbeitungseinrichtung an die dezentrale Steuereinrichtung des betreffenden Teilnetzes übermittelt und dort importiert, d.h. als Trainingsparameter des neuronalen Netzes der Zustandsschätzeinrichtung der Steuereinrichtung übernommen. Somit liegt in der Zustandsschätzeinrichtung nun ein trainiertes künstliches neuronales Netz vor, welches für die Zustandsschätzung der Zustandswerte des Teilnetzes vorbereitet ist.

Die Trainingsphase ist in jedem Fall vor einer Betriebsaufnahme des Teilnetzes und bei wesentlichen Topologieänderungen (z.B. Einfügen neuer Netzabschnitte, Quellen oder Lasten) durchzuführen, damit das neuronale Netz jeweils an die aktuellen Gegebenheiten des Teilnetzes angepasst ist.

Eine weitere vorteilhafte Ausführungsform des erfindungsgemäßen Verfahrens besteht zudem darin, dass die Steuereinrichtung mittels der Zustandsschätzeinrichtung ermittelte Zustandswerte mit für ausgewählte Messstellen des Teilnetzes gemessenen elektrischen Parametern vergleicht, und bei einer über einem Toleranzschwellenwert liegenden Abweichung zwischen den Zustandswerten und den elektrischen Parametern ein erneutes Training des künstlichen neuronalen Netzes der Zustandsschätzeinrichtung durchgeführt wird.

Gemäß dieser Ausführungsform findet somit eine Selbstkontrolle der Zuverlässigkeit der mit dem neuronalen Netz der dezentralen Steuereinrichtung durchgeführten Abschätzung der Zustandswerte statt. Stimmen diese nicht hinreichend genau mit tatsächlichen elektrischen Zuständen des Teilnetzes, die an ausgewählten Messstellen erfasst werden, überein, so wird ein erneutes Training durchgeführt. Damit kann das neuronale Netz auch langsamen Änderungen im Verhalten des Teilnetzes, die nicht auf wesentliche Eingriffe und Veränderungen zurückzuführen sind, nachgeführt werden.

Als ausgewählte Messstellen können beispielsweise in dem Teilnetz ohnehin vorhandene Messsensoren (z.B. zu lokalen Schutz- oder Steuerzwecken), Steuergeräte an dezentralen Quellen oder sogenannte Smart Meter verwendet werden.

Die oben genannte Aufgabe wird hinsichtlich der dezentralen Steuereinrichtung durch eine dezentrale Steuereinrichtung zum Betreiben eines elektrische Lasten und/oder elektrische Quellen aufweisenden Teilnetzes eines elektrischen Energieversorgungsnetzes gelöst, wobei die Steuereinrichtung dem Teilnetz als dezentrale Steuereinrichtung zugeordnet und dazu eingerichtet ist, unter Verwendung von Zustandswerten, die einen aktuellen elektrischen Betriebszustand des Teilnetzes angeben, Steuersignale zu erzeugen, die zur Steuerung von Komponenten des Teilnetzes herangezogen werden. Die Steuereinrichtung umfasst eine Zustandsschätzeinrichtung, die dazu eingerichtet ist, die Zustandswerte unter Verwendung von der Zustandsschätzeinrichtung zugeführten Eingangssignalen zu schätzten, und eine Auswerteinrichtung, die dazu eingerichtet ist, die Zustandswerte daraufhin zu überprüfen, ob sie auf einen ungewünschten elektrischen Betriebszustand des Teilnetzes des Energieversorgungsnetzes hinweisen, und ein Steuersignal zu erzeugen, falls die Zustandswerte auf einen ungewünschten elektrischen Betriebszustand hinweisen.

Erfindungsgemäß ist vorgesehen, dass die Zustandsschätzeinrichtung dazu eingerichtet ist, unter Verwendung von Eingangssignalen, die einen in dem Bereich des Teilnetzes vorliegenden Umgebungszustand angeben, die Zustandswerte zu ermitteln, wobei die Zustandsschätzeinrichtung ein künstliches neuronales Netz umfasst, das zur Ermittlung der Zustandswerte unter Verwendung der Eingangssignale trainiert ist.

Die Steuereinrichtung kann hierbei z.B. in Form eines Automatisierungsgerätes, z.B. eines Unterstationsleitgerätes, oder eines Industrie-PCs ausgeführt sein.

Hinsichtlich der erfindungsgemäßen Steuereinrichtung gelten alle zu dem erfindungsgemäßen Verfahren voranstehend und nachfolgend gemachten Ausführungen und umgekehrt in entsprechender Weise, insbesondere ist die erfindungsgemäße Steuereinrichtung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Steuereinrichtung wird auf die zu dem erfindungsgemäßen Verfahren beschriebenen Vorteile verwiesen.

Eine vorteilhafte Ausführungsform der erfindungsgemäßen Steuereinrichtung sieht vor, dass die Steuereinrichtung Bestandteil einer dem Teilnetz zugeordneten Ortsnetzstation ist. Als Ortsnetzstation wird in diesem Zusammenhang jede Verbindungsstelle zwischen zwei Teilnetzen angesehen. Üblicherweise umfasst eine Ortsnetzstation einen oder mehrere Transformatoren sowie Steuerelektronik und ggf. Sensoren und Kommunikationstechnik. Die erfindungsgemäße Steuereinheit lässt sich daher sehr einfach in die ohnehin vorhandenen Komponenten integrieren. Zusätzlich können lokale Sensoren an der Ortsnetzstation vorgesehen sein, mit denen Wetterinformationen im Bereich des Teilnetzes erfasst und als Wettersignal an die Steuereinrichtung weitergegeben werden. Alternativ können solche Informationen auch von externen Dienstanbietern übernommen werden. Eine Uhrzeitinformation und Angabe einer Tagesart kann zudem über einen integrierten oder externen Zeitgeber erfolgen.

Hinsichtlich des Systems wird die oben genannte Aufgabe schließlich durch ein System zum Betreiben eines elektrischen Energieversorgungsnetzes mit einem elektrische Lasten und/oder elektrische Quellen aufweisenden Teilnetz gelöst.

Erfindungsgemäß ist vorgesehen, dass das System eine dezentrale Steuereinrichtung nach einem der Ansprüche 6 oder 7 und eine zentrale Datenverarbeitungseinrichtung aufweist, die dazu eingerichtet ist, zum Trainieren des künstlichen neuronalen Netzes der Zustandsschätzeinrichtung der dezentralen Steuereinrichtung ein zweites künstliches neuronales Netz, dessen Struktur mit derjenigen des künstlichen neuronalen Netzes der Zustandsschätzeinrichtung übereinstimmt, unter Verwendung von historischen Eingangssignalen und zugehörigen Zustandswerten unter Bildung von Trainingsparametern, die das Verhalten des zweiten künstlichen neuronalen Netzes bestimmen, anzulernen.

Hinsichtlich des erfindungsgemäßen Systems gelten alle zu dem erfindungsgemäßen Verfahren und der erfindungsgemäßen Steuereinrichtung voranstehend und nachfolgend gemachten Ausführungen und umgekehrt in entsprechender Weise, insbesondere ist das erfindungsgemäße System zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Systems wird auf die zu dem erfindungsgemäßen Verfahren und der erfindungsgemäßen Steuereinrichtung beschriebenen Vorteile verwiesen.

Mit dem vorgeschlagenen Verfahren, der vorgeschlagenen Steuereinrichtung sowie dem vorgeschlagenen System ergeben sich unter anderem die folgenden Vorteile:

- Es ist nur eine normierte Kommunikationsschnittstelle notwendig, über die die Trainingsparameter zwischen der zentralen Datenverarbeitungseinrichtung und der jeweiligen dezentralen Steuereinrichtung ausgetauscht wird. Diese Schnittstelle ist unabhängig von den ansonsten in den Energieversorgungsnetzen eingesetzten IT-Systemen.

- Die Zustandsschätzung in der dezentralen Steuereinrichtung bedarf keiner zusätzlichen Messinformationen. Sie nutzt die Zusammenhänge zwischen dem Verhalten der Lasten/Quellen und den exogenen Einflussgrößen (z.B. Wetter, Zeit) aus. Hierdurch kann die Zustandsschätzung auch von Steuereinrichtungen mit vergleichsweise geringer Rechenkapazität durchgeführt werden. Außerdem fallen keine hohen Kosten zur Installation teurer Messtechnik im Teilnetz an.

- Im Vergleich zu einer zentralen Lösung ist das vorgeschlagene Verfahren nicht anfällig für Störungen der Kommunikation zwischen der Steuereinrichtung und einem zentralen Leitsystem. Nach dem Training kann die Steuereinrichtung autark arbeiten, wenn die exogenen Einflussgrößen lokal ermittelt werden.

- Das Verfahren kann sich optional selbst überwachen und regelmäßig eine Güte der geschätzten Zustandswerte durch einen Vergleich von aktuell vorliegenden Messinformationen mit den Zustandswerten ermitteln.

- Es fällt nur geringer Konfigurationsaufwand bei der Inbetriebsetzung an, weil die Netzmodelldaten nicht in der dezentralen Steuereinrichtung benötigt werden und darüber hinaus keine zusätzliche Messsensorik im Teilnetz installiert und in der Steuereinrichtung parametriert werden muss.

- Die zentrale Datenverarbeitungseinrichtung kann in beliebiger Form, z.B. als Bestandteil einer Netzleitstelle oder auch als Cloud-Service eines Serviceanbieters bereitgestellt werden.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen

Figur 1    eine schematische Darstellung eines elektrischen Energieversorgungsnetzes mit zwei Quellen und/oder Lasten aufweisenden Teilnetzen;

Figur 2    eine schematische Darstellung eines Teilnetzes mit einer dezentralen Steuereinrichtung;

Figur 3    eine detailliertere Darstellung der dezentralen Steuereinrichtung;

Figur 4    ein System mit einer dezentralen Steuereinrichtung und einer zentralen Datenverarbeitungseinrichtung; und

Figur 5    ein Ablaufschema zur Erläuterung der Vorgehensweise beim Trainieren eines künstlichen neuronalen Netzes.

In den Figuren verwendete identische Bezugszeichen bezeichnen dabei übereinstimmende oder vergleichbare Merkmale.

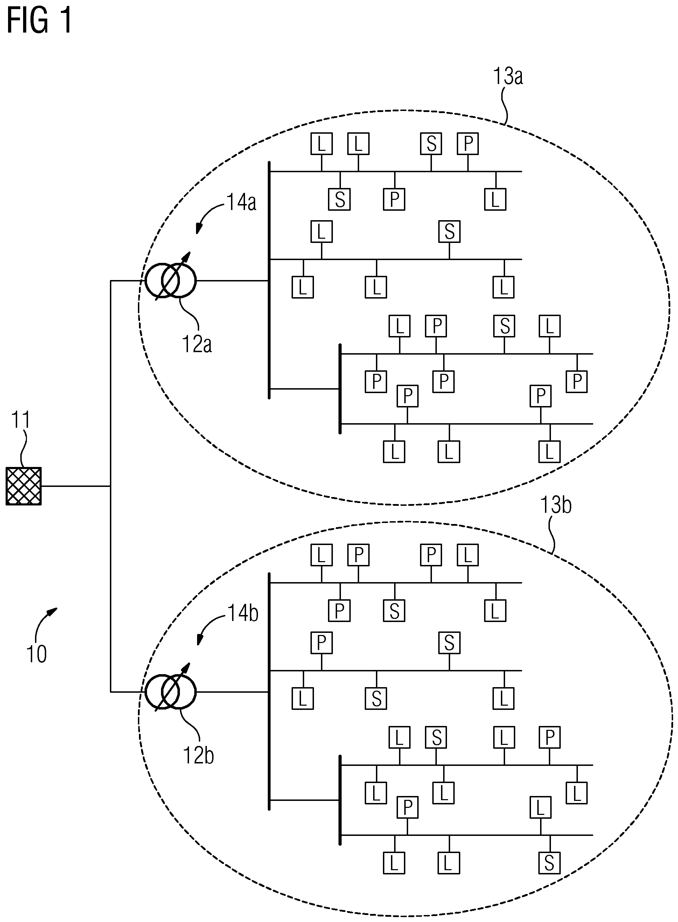

Figur 1 zeigt in schematischer Darstellung ein elektrisches Energieversorgungsnetz 10. Mit einem in Figur 1 nur angedeuteten Mittelspannungsnetz 11 sind über Transformatoren 12a, 12b, die lediglich beispielhaft als regelbare Transformatoren ausgeführt sind, zwei Teilnetze 13a, 13b verbunden, in denen sich jeweils elektrische Lasten L, elektrische Quellen S sowie kombinierte elektrische Lasten und Quellen P (auch als "Prosumer" bezeichnet) befinden. Elektrische Quellen können beispielsweise dezentrale Energieerzeuger in Form von Windkraftanlagen, Photovoltaikanlagen (PV), Biomassekraftwerken, Blockheizkraftwerken etc. sein. Unter Prosumern sollen kombinierte Lasten und Quellen verstanden werden, also beispielsweise Haushalte mit PV-Modulen zur Stromerzeugung. Prosumer werden nachfolgend sowohl als Lasten als auch als Quellen behandelt. Die Teilnetze 13a, 13b können beispielsweise auf der Niederspannungsebene des Energieversorgungsnetzes 10 liegen. Selbstverständlich sind auch andere Netztopologien als die in Figur 1 dargestellte möglich, insbesondere kann die Anzahl von Teilnetzen beliebig sein und von den in Figur 1 dargestellten zwei Teilnetzen abweichen.

Die Verbindungsstellen 14a, 14b zwischen dem Mittelspannungsnetz 11 und den Teilnetzen 13a, 13b stellen Unterstationen dar und werden häufig auch als Ortsnetzstationen bezeichnet. Sie umfassen die regelbaren Transformatoren 12a, 12b.

Um den Betrieb der Teilnetze regeln zu können und insbesondere ungewünschten Betriebszuständen, wie z.B. Spannungsschwankungen, entgegenwirken zu können, sind an den Verbindungsstellen 14a, 14b dezentrale Steuereinrichtungen vorgesehen. Mit diesen können in Abhängigkeit von dem aktuellen Betriebszustand des jeweiligen Teilnetzes 13a, 13b Steuersignale erzeugt werden, die beispielsweise zur Ansteuerung der regelbaren Transformatoren (z.B. zur Optimierung der Stellung eines Stufenschalters) oder zum Zu- oder Abschalten von (in Figur 1 nicht dargestellten) Kondensatorbatterien verwendet werden können. Diese Maßnahmen werden unter anderem zur Spannungsblindleistungskompensation in den Teilnetzen 13a, 13b eingesetzt.

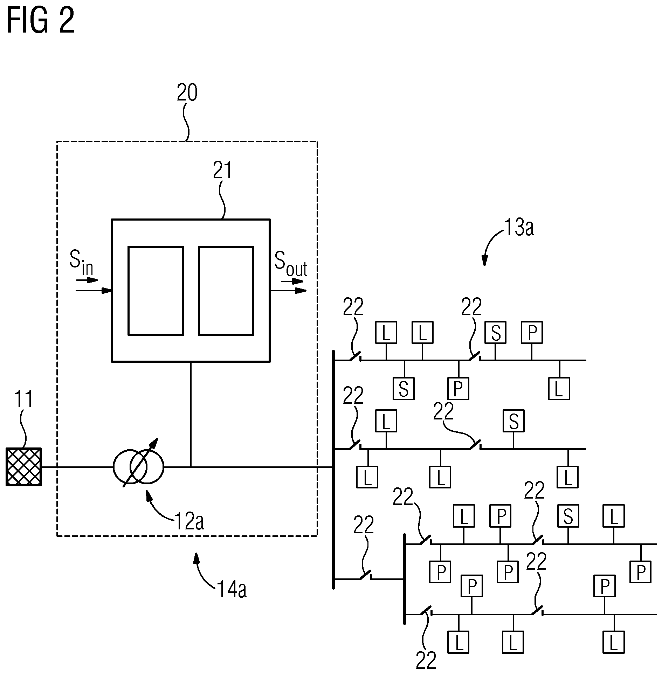

Figur 2 zeigt beispielhaft die Verbindungsstelle 14a zwischen dem Teilnetz 13a und dem Mittelspannungsnetz 11 in genauerer Darstellung. Der Aufbau der Verbindungsstelle 14b kann vergleichbar sein. An der Verbindungsstelle kann beispielsweise eine in Figur 2 durch eine gestrichelte Linie angedeutete Ortsnetzstation 20 vorgesehen sein, die den Transformator 12a und eine dezentrale Steuereinrichtung 21 aufweist.

Die dezentrale Steuereinrichtung 21 ist dazu eingerichtet, unter Verwendung von Eingangssignalen $S_{in}$ Steuersignale $S_{out}$ zu bilden, die zur Steuerung von Komponenten des Teilnetzes verwendet werden können. Die Steuersignale $S_{out}$ können hierzu beispielsweise dem regelbaren Transformator 12a zugeführt werden, um eine Stellung seines Stufenschalters zu verändern und so die Spannung in dem Teilnetz 13a zu beeinflussen.

In Figur 2 sind außerdem Schalteinrichtungen 22 angedeutet, die sich in dem Teilnetz 13a befinden. Bei den Schalteinrichtungen 22 kann es sich um manuell oder automatisch schaltbare Schalter oder um Sicherungen handeln. Der Schaltzustand der Schalteinrichtungen 22 beeinflusst die Topologie des Teilnetzes 13a und die Stromflüsse in dem Teilnetz 13a, z.B. indem Abschnitte des Teilnetzes vom übrigen Teilnetz 13a getrennt oder mit diesem verbunden werden.

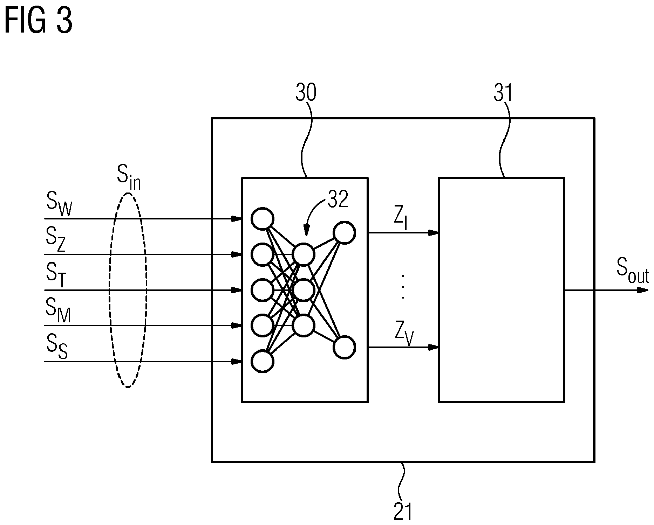

Figur 3 zeigt die Steuereinrichtung 21 in detaillierterer Darstellung. Die Steuereinrichtung 21 umfasst eine Zustandsschätzeinrichtung 30 und eine Auswerteinrichtung 31. In der Zustandsschätzeinrichtung 31 ist ein in Figur 3 höchstschematisch und lediglich beispielhaft angedeutetes künstliches neuronales Netz 32 implementiert. Das neuronale Netz 32 ist dazu trainiert, unter Verwendung der Eingangssignale $S_{in}$ Zustandswerte $Z_I$ und $Z_V$ zu schätzen, die einen elektrischen Betriebszustand des Teilnetzes 13a angeben. Bei den Zustandswerten kann es sich beispielsweise um Knotenspannungen $Z_V$ an den Knoten des Teilnetzes 13a und/oder auf den Leitungen des Teilnetzes 13a fließende Leitungsströme $Z_I$ handeln. Die Zustandswerte $Z_I$, $Z_V$ werden der Auswerteinrichtung 32 zugeführt, die eine Überprüfung durchführt, ob die $Z_I$, $Z_V$ Zustandswerte $Z_I$, $Z_V$ auf einen ungewünschten Betriebszustand des Teilnetzes 13a hindeuten. Ein solcher ungewünschter Zustand kann beispielsweise anhand von Spannungsschwankungen erkannt werden. Sofern ein ungewünschter Betriebszustand vorliegt, erzeugt die Auswerteinrichtung 31 die Steuersignale $S_{out}$ zur Ansteuerung von Komponenten des Teilnetzes 13a, wie beispielsweise dem regelbaren Transformator 12a.

Bei den Eingangssignalen $S_{in}$ kann es sich um eines oder mehrere der folgenden Signale handeln:

- ein das aktuelle Wetter im Bereich des Teilnetzes 13a angebendes Wettersignal $S_W$; ein solches Wettersignal kann beispielsweise Informationen über Sonneneinstrahlung (Helligkeit und Einstrahlungswinkel), Windrichtung, Windgeschwindigkeit, Umgebungstemperatur etc. umfassen;

- ein die aktuelle Uhrzeit angebendes Zeitsignal $S_Z$;

- ein die Art des aktuellen Tages angebendes Tagesartsignal $S_T$; ein solches Tagesartsignal kann beispielsweise angeben, ob es sich um einen Wochentag, einen Samstag, einen Sonntag, einen Feiertag, einen Arbeitstag etc. handelt;

- ein einen oder mehrere gemessene elektrische Parameter im Teilnetz 13a angebendes Messsignal $S_M$; ein solches Messsignal kann beispielsweise an der Verbindungsstelle 14a erfasste Ströme und/oder Spannungen umfassen;

- ein einen Schaltzustand der Schalteinrichtungen 22 im Teilnetz 13a angebendes Schaltzustandssignal $S_S$; ein solches Schaltzustandssignal kann beispielsweise angeben, ob ein manuell oder automatisch bedienbarer Schalter oder eine Sicherung aktuell den Strom leitet oder unterbricht.

Zur Erfassung der Eingangssignale kann die Steuereinrichtung 21 beispielsweise mit lokalen Sensoren (z.B. Sensoren zum Bestimmen von Wetterinformationen im Bereich des Teilnetzes) verbunden sein. Alternativ können alle oder einige Eingangssignale auch von externen Serviceanbietern (z.B. Wetterdiensten) übernommen werden. Dazu kann die Steuereinrichtung 21 mit einer geeigneten Kommunikationseinrichtung ausgestattet sein, um z.B. über ein TCP/IP-Netzwerk eine Internetverbindung herzustellen oder über ein Modem eine Telefonverbindung aufzubauen.

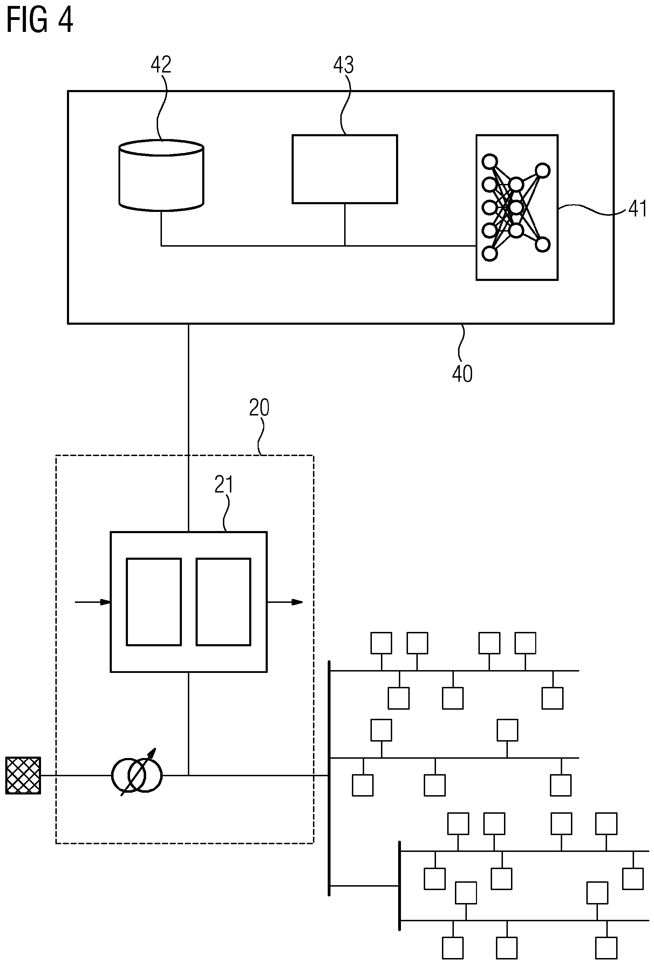

Das Training des neuronalen Netzes 32 wird nicht in der Steuereinrichtung 21 selbst durchgeführt, sondern findet in einer mit der Steuereinrichtung verbundenen zentralen Datenverarbeitungseinrichtung 40 statt (vgl. Figur 4). Hierzu weist die zentrale Datenverarbeitungseinrichtung 40 ebenfalls ein neuronales Netz 41 auf ("zweites neuronales Netz"), dessen Struktur mit der des neuronalen Netzes 32 übereinstimmt. Außerdem umfasst die zentrale Datenverarbeitungseinrichtung 40 ein Archivsystem 42, in dem historische Eingangssignale gespeichert sind, und eine Recheneinrichtung 43, die Berechnungsprogramme zur Ermittlung des Verhaltens der Lasten und Quellen und des daraus resultierenden Netzzustandes bei Vorliegen bestimmter durch die Eingangssignale angegebener Umgebungs- und Netzzustände geeignet sind.

Mit der zentralen Datenverarbeitungseinrichtung 40 wird das zweite neuronale Netz 41 derart trainiert, dass es mit zu dem fraglichen Teilnetz 13a passenden Eingangssignalen den jeweils resultierenden Netzzustand beschreibende Zustandswerte bildet. Die während dieser Trainingsphase festgelegten Trainingsparameter werden daraufhin an die dezentrale Steuereinrichtung 21 übertragen und dort von der Zustandsschätzeinrichtung 30 für das neuronale Netz 32 als Trainingsparameter übernommen. Somit wird dem neuronalen Netz 32 dasselbe Verhalten eingeprägt, das dem zweiten neuronalen Netz antrainiert worden ist.

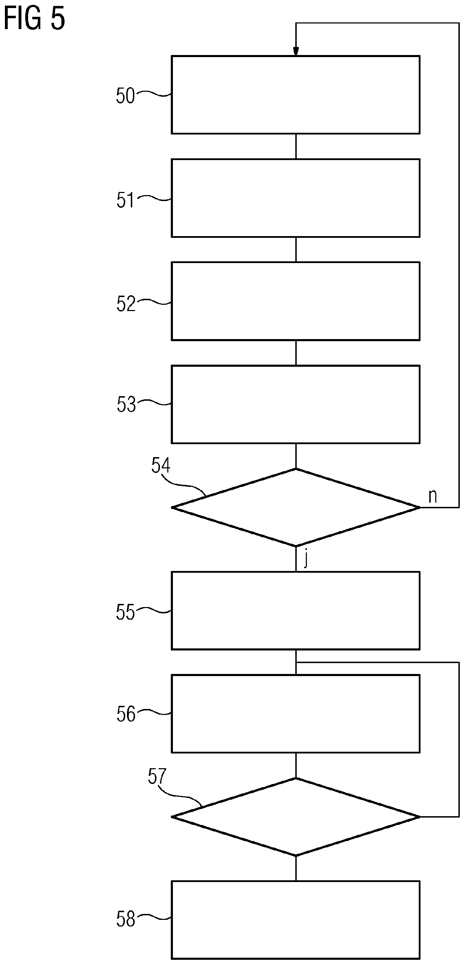

Figur 5 zeigt hierzu ein Ablaufschema, mit dem die Vorgehensweise beim Training des zweiten neuronalen Netzes 41 und der Übernahme der Trainingsparameter durch das neuronale Netz 32 der dezentralen Steuereinrichtung 21 erläutert wird. Dabei werden auf der Basis der von dem Archivsystem 42 bereitgestellten Eingangssignale (z.B. archivierten Wetterinformationen und Messwerten elektrischer Parameter) die Trainingsparameter für das zweite neuronale Netz 41 berechnet. Dazu werden für das Teilnetz 13a die folgenden Schritte durchlaufen:

In einem ersten Schritt 50 wird ein Betrachtungszeitraum (z.B. ein bestimmter Tag oder eine bestimmte Zeitspanne innerhalb eines Tages) aus dem Archivsystem 42 ausgewählt. Anhand der für den ausgewählten Betrachtungszeitraum und das fragliche Teilnetz 13a archivierten Eingangssignale werden in Schritt 51 mittels eines Lastberechnungsprogramms daraufhin Verläufe elektrischen Zustände (z.B. Leistungsaufnahme, Stromfluss, Spannung am Knoten) der elektrischen Lasten in dem Teilnetz 13a bestimmt. Außerdem werden in Schritt 52 anhand der für den ausgewählten Betrachtungszeitraum und das fragliche Teilnetz 13a archivierten Eingangssignale auch Verläufe der elektrischen Zustände (z.B. Leistungsabgabe, Stromfluss, Spannung am Knoten) der elektrischen Quellen in dem Teilnetz 13a bestimmt.

Unter Verwendung der in den Schritten 51 und 52 berechneten Verläufe für Lasten und Quellen werden für den fraglichen Zeitraum in Schritt 53 daraufhin mit einem Zustandsschätzer die den Betriebszustand des Teilnetzes 13a in dem fraglichen Betrachtungszeitraum beschreibenden Zustandswerte bestimmt. Dabei können auch archivierte Messwerte elektrischer Parameter und Informationen über die offene/geschlossene Trennstellen ("Schaltzustandssignale") in dem fraglichen Teilnetz herangezogen werden.

In Schritt 54 wird daraufhin geprüft, ob bereits alle für das Teilnetz 13a in dem Archivsystem gespeicherten Betrachtungszeiträume verwendet worden sind. Falls dies noch nicht der Fall ist, wird in Schritt 50 einer der noch nicht verwendeten Betrachtungszeiträume ausgewählt und es werden die Schritte 51 bis 53 für diesen Betrachtungszeitraum erneut durchgeführt. Falls in Schritt 54 festgestellt wird, dass bereits alle gespeicherten Betrachtungszeiträume verwendet worden sind, wird das Verfahren bei Schritt 55 fortgesetzt.

Als Ergebnis der vorigen Durchläufe liegt in Schritt 55 eine Sammlung von Daten vor, die aus Eingangssignalen und dazu passenden Ausgangssignalen (Zustandswerten) bestehen. Diese Eingangssignale und dazu passenden Zustandswerte werden in einem folgenden Schritt 56 zum Training des zweiten neuronalen Netzes 41 verwendet. In Schritt 57 wird daraufhin geprüft, ob das Training des zweiten neuronalen Netzes bereits derart fortgeschritten ist, dass es zu den Eingangssignalen hinreichend genau passende Zustandswerte ermittelt. Ist dies nicht der Fall, werden die festgestellten Abweichungen zwischen den berechneten Zustandswerten und den gewünschten Zustandswerten erneut in Schritt 56 zum Training des zweiten neuronalen Netzes 41 eingespielt ("Backpropagation"). Während des Trainings werden Trainingsparameter des zweiten neuronalen Netzes 41 angepasst.

Wird in Schritt 57 hingegen eine zufriedenstellende Übereinstimmung der mit dem trainierten zweiten neuronalen Netz 41 ermittelten Zustandswerte mit den gewünschten Zustandswerten festgestellt, so ist das Training des zweiten neuronalen Netzes 41 abgeschlossen. In Schritt 58 werden daraufhin die in der Trainingsphase (Schritte 56 und 57) ermittelten Trainingsparameter an das neuronale Netz 32 der dezentralen Steuereinrichtung 21 übermittelt und dort importiert. Damit wird dem neuronalen Netz 32 dasjenige Verhalten aufgeprägt, das das zweite neuronale Netz 41 in der Trainingsphase erlernt hat.

Mit den übermittelten Trainingsparametern kann daraufhin das neuronale Netz 32 betrieben werden. Auf diese Weise kann die dezentrale Steuereinrichtung 21 mittels der Zustandsschätzeinrichtung 30 anhand von aktuellen Eingangssignalen einen aktuellen Betriebszustand des Teilnetzes beschreibende Zustandswerte ermitteln. Diese bilden daraufhin die Basis für eine in der Auswerteinrichtung 31 durchgeführte Überprüfung, ob ein ungewünschter Betriebszustand vorhanden oder in Sicht ist. Ist dies der Fall, erzeugt die Auswerteinrichtung 31 geeignete Steuersignale, um dem ungewünschten Betriebszustand entgegenzuwirken.

Das beschriebene Training kann von der zentralen Datenverarbeitungseinrichtung 40 in entsprechender Weise auch für andere dezentrale Steuereinrichtungen 21 durchgeführt werden. Dabei ist darauf zu achten, dass beim Training des zweiten neuronalen Netzes immer die zu dem fraglichen Teilnetz passenden Eingangssignale und Zustandswerte verwendet werden.

Die zentrale Datenverarbeitungseinrichtung 40 kann hierzu beispielsweise auch von einem Serviceanbieter z.B. als Cloud-Service betrieben werden.

Im Betrieb kann die dezentrale Steuereinrichtung, sofern in dem Teilnetz 13a Sensoren zur Erfassung von elektrischen Parametern vorhanden sind, eine Prüfung durchführen, ob die mittels des neuronalen Netzes geschätzten Zustandswerte hinreichend genau mit den durch Messung ermittelten Zustandswerten übereinstimmen. Ist dies nicht der Fall, kann eine erneute Trainingsphase in der zentralen Datenverarbeitungseinrichtung 40 angestoßen werden, um das neuronale Netz 32 der dezentralen Steuereinrichtung 21 durch Erzeugung und Übernahme neuer Trainingsparameter an etwaige Veränderungen im Verhalten des Teilnetzes 13a anzupassen.

Die Komponenten der dezentralen Steuereinrichtung 21 und der zentralen Datenverarbeitungseinrichtung 40 können als Hardware oder Software oder eine Kombination aus beidem ausgebildet sein.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

**Patentansprüche**

1. Verfahren zum Betreiben eines elektrischen Energieversorgungsnetzes (10) mit einem elektrische Lasten (L) und/oder elektrische Quellen (S) aufweisenden Teilnetz (13a), wobei bei dem Verfahren

   - dem Teilnetz (13a) eine dezentrale Steuereinrichtung (21) zugeordnet ist, mittels der unter Verwendung von Zustandswerten, die einen aktuellen elektrischen Betriebszustand des Teilnetzes (13a) angeben, Steuersignale erzeugt werden, die zur Steuerung von Komponenten des Teilnetzes (13a) herangezogen werden, wobei
   - die dezentrale Steuereinrichtung (21) eine Zustandsschätzeinrichtung (30) umfasst, mittels der die Zustandswerte unter Verwendung von der Zustandsschätzeinrichtung zugeführten Eingangssignalen geschätzt werden;

- die dezentrale Steuereinrichtung (21) eine Auswerteinrichtung (31) umfasst, mittels der die Zustandswerte daraufhin überprüft werden, ob sie auf einen ungewünschten elektrischen Betriebszustand des Teilnetzes (13a) des Energieversorgungsnetzes (10) hinweisen, und ein Steuersignal erzeugt wird, falls die Zustandswerte auf einen ungewünschten elektrischen Betriebszustand hinweisen;
**dadurch gekennzeichnet, dass**
- der Zustandsschätzeinrichtung (30) Eingangssignale zugeführt werden, die einen in dem Bereich des Teilnetzes (13a) vorliegenden Umgebungszustand angeben, wobei
- als Eingangssignale ein oder mehrere der folgenden Signale verwendet werden:
- ein das aktuelle Wetter im Bereich des Teilnetzes (13a) angebendes Wettersignal;
- ein die aktuelle Uhrzeit angebendes Zeitsignal;
- ein die Art des aktuellen Tages angebendes Tagesartsignal; und
- die Zustandsschätzeinrichtung (30) ein künstliches neuronales Netz (32) umfasst, das derart trainiert ist, dass es unter Verwendung der Eingangssignale die Zustandswerte ermittelt.

2. Verfahren nach Anspruch 1,
**dadurch gekennzeichnet, dass**

- als Eingangssignale außerdem mindestens einer der folgenden Signale verwendet wird:
- ein einen oder mehrere gemessene elektrische Parameter im Teilnetz (13a) angebendes Messsignal;
- ein einen Schaltzustand von Schalteinrichtungen (22) im Teilnetz (13a) angebendes Schaltzustandssignal.

3. Verfahren nach Anspruch 1 oder 2,
**dadurch gekennzeichnet, dass**

- als Zustandswerte an den Knoten des Teilnetzes (13a) aktuell vorliegende Knotenspannungen und/oder auf den Leitungen des Teilnetzes (13a) vorliegende Leitungsströme ermittelt werden.

4. Verfahren nach einem der vorangehenden Ansprüche,
**dadurch gekennzeichnet, dass**

- zum Trainieren des künstlichen neuronalen Netzes (32) ein zweites künstliches neuronales Netz (41), dessen Struktur mit derjenigen des künstlichen neuronalen Netzes (32) der Zustandsschätzeinrichtung (30) übereinstimmt, in einer zentralen Datenverarbeitungseinrichtung (40) unter Verwendung von historischen Eingangssignalen und zugehörigen Zustandswerten unter Bildung von Trainingsparametern angelernt wird, die das Verhalten des zweiten künstlichen neuronalen Netzes (41) bestimmen; und
- die Trainingsparameter an das künstliche neuronale Netz (32) der Zustandsschätzeinrichtung (30) übermittelt und von diesem übernommen werden.

5. Verfahren nach Anspruch 4,
**dadurch gekennzeichnet, dass**

- die Steuereinrichtung (21) mittels der Zustandsschätzeinrichtung (32) ermittelte Zustandswerte mit für ausgewählte Messstellen des Teilnetzes (13a) gemessenen elektrischen Parametern vergleicht; und
- bei einer über einem Toleranzschwellenwert liegenden Abweichung zwischen den Zustandswerten und den elektrischen Parametern ein erneutes Training des künstlichen neuronalen Netzes (32) der Zustandsschätzeinrichtung (30) durchgeführt wird.

6. Dezentrale Steuereinrichtung (21) zum Betreiben eines elektrische Lasten (L) und/oder elektrische Quellen (S) aufweisenden Teilnetzes (13a) eines elektrischen Energieversorgungsnetzes (10), wobei

- die dezentrale Steuereinrichtung (21) dem Teilnetz (13a) zugeordnet und dazu eingerichtet ist, unter Verwendung von Zustandswerten, die einen aktuellen elektrischen Betriebszustand des Teilnetzes (13a) angeben, Steuersignale zu erzeugen, die zur Steuerung von Komponenten des Teilnetzes (13a) herangezogen werden;
- die Steuereinrichtung (21) eine Zustandsschätzeinrichtung (30) umfasst, die dazu eingerichtet ist, die Zustandswerte unter Verwendung von der Zustandsschätzeinrichtung (30) zugeführten Eingangssignalen zu schätzten; und
- die Steuereinrichtung (21) eine Auswerteinrichtung (31) umfasst, die dazu eingerichtet ist, die Zustandswerte daraufhin zu überprüfen, ob sie auf einen ungewünschten elektrischen Betriebszustand des Teilnetzes (13a) des Energieversorgungsnetzes (10) hinweisen, und ein Steuersignal zu erzeugen, falls die Zustandswerte auf einen ungewünschten elektrischen Betriebszustand hinweisen;
**dadurch gekennzeichnet, dass**
- die Zustandsschätzeinrichtung (30) dazu eingerichtet ist, unter Verwendung von Eingangssignalen, die einen in dem Bereich des Teilnetzes (13a) vorliegenden Umgebungszustand angeben, wobei

- als Eingangssignale ein oder mehrere der folgenden Signale verwendet werden:
- ein das aktuelle Wetter im Bereich des Teilnetzes (13a) angebendes Wettersignal;
- ein die aktuelle Uhrzeit angebendes Zeitsignal;
- ein die Art des aktuellen Tages angebendes Tagesartsignal die Zustandswerte zu ermitteln; wobei
- die Zustandsschätzeinrichtung (30) ein künstliches neuronales Netz (32) umfasst, das zur Ermittlung der Zustandswerte unter Verwendung der Eingangssignale trainiert ist.

7. Dezentrale Steuereinrichtung (31) nach Anspruch 6, **dadurch gekennzeichnet, dass**

- die Steuereinrichtung (21) Bestandteil einer dem Teilnetz (13a) zugeordneten Ortsnetzstation (20) ist.

8. System zum Betreiben eines elektrischen Energieversorgungsnetzes (10) mit einem elektrische Lasten (L) und/oder elektrische Quellen (S) aufweisenden Teilnetz (13a), **dadurch gekennzeichnet, dass**

- das System eine dezentrale Steuereinrichtung (21) nach einem der Ansprüche 6 oder 7 aufweist; und
- das System eine zentrale Datenverarbeitungseinrichtung (40) aufweist, die dazu eingerichtet ist, zum Trainieren des künstlichen neuronalen Netzes (32) der Zustandsschätzeinrichtung (30) der dezentralen Steuereinrichtung (21) ein zweites künstliches neuronales Netz (41), dessen Struktur mit derjenigen des künstlichen neuronalen Netzes (32) der Zustandsschätzeinrichtung (30) übereinstimmt, unter Verwendung von historischen Eingangssignalen und zugehörigen Zustandswerten unter Bildung von Trainingsparameters, die das Verhalten des zweiten künstlichen neuronalen Netzes (41) bestimmen, anzulernen.

**Claims**

1. Method for operating an electrical energy supply network (10) having a subnetwork (13a) which has electrical loads (L) and/or electrical sources (S), wherein, in the method,

- a decentralized control device (21) is assigned to the subnetwork (13a) and is used to generate, using state values indicating a current electrical operating state of the subnetwork (13a), control signals which are used to control components of the subnetwork (13a), wherein

- the decentralized control device (21) comprises a state estimation device (30) which is used to estimate the state values using input signals supplied to the state estimation device;
- the decentralized control device (21) comprises an evaluation device (31) which is used to check the state values in order to determine whether they indicate an undesirable electrical operating state of the subnetwork (13a) of the energy supply network (10), and a control signal is generated if the state values indicate an undesirable electrical operating state;
**characterized in that**
- the state estimation device (30) is supplied with input signals which indicate an environmental state in the region of the subnetwork (13a), wherein
- one or more of the following signals are used as input signals:
- a weather signal indicating the current weather in the region of the subnetwork (13a);
- a time signal indicating the current time;
- a type of day signal indicating the type of the current day; and
- the state estimation device (30) comprises an artificial neural network (32) which is trained in such a manner that it determines the state values using the input signals.

2. Method according to Claim 1, **characterized in that**

- at least one of the following signals is also used as input signals:
- a measurement signal indicating one or more measured electrical parameters in the subnetwork (13a);
- a switching state signal indicating a switching state of switching devices (22) in the subnetwork (13a).

3. Method according to Claim 1 or 2, **characterized in that**

- node voltages currently present at the nodes of the subnetwork (13a) and/or line currents present on the lines of the subnetwork (13a) are determined as state values.

4. Method according to one of the preceding claims, **characterized in that**

- in order to train the artificial neural network (32), a second artificial neural network (41), the structure of which corresponds to that of the artificial neural network (32) of the state estimation device (30), is trained in a central data processing device (40) using historical input signals and associated state values with the formation of training parameters which determine the behaviour of the second artificial neural network (41); and
- the training parameters are transmitted to the artificial neural network (32) of the state estimation device (30) and are accepted by said network.

5. Method according to Claim 4,
**characterized in that**

- the control device (21) compares state values determined by means of the state estimation device (32) with electrical parameters measured for selected measuring points of the subnetwork (13a); and
- in the event of a difference between the state values and the electrical parameters which is above a tolerance threshold value, the artificial neural network (32) of the state estimation device (30) is retrained.

6. Decentralized control device (21) for operating a subnetwork (13a) of an electrical energy supply network (10), which subnetwork has electrical loads (L) and/or electrical sources (S), wherein

- the decentralized control device (21) is assigned to the subnetwork (13a) and is configured to generate, using state values indicating a current electrical operating state of the subnetwork (13a), control signals which are used to control components of the subnetwork (13a);
- the control device (21) comprises a state estimation device (30) which is configured to estimate the state values using input signals supplied to the state estimation device (30); and
- the control device (21) comprises an evaluation device (31) which is configured to check the state values in order to determine whether they indicate an undesirable electrical operating state of the subnetwork (13a) of the energy supply network (10) and to generate a control signal if the state values indicate an undesirable electrical operating state; **characterized in that**
- the state estimation device (30) is configured to determine the state values using input signals indicating an environmental state in the region of the subnetwork (13a), wherein
- one or more of the following signals are used as input signals:
- a weather signal indicating the current weather in the region of the subnetwork (13a);
- a time signal indicating the current time;
- a type of day signal indicating the type of the current day; wherein
- the state estimation device (30) comprises an artificial neural network (32) which is trained in order to determine the state values using the input signals.

7. Decentralized control device (31) according to Claim 6,
**characterized in that**

- the control device (21) is part of a secondary substation (20) assigned to the subnetwork (13a).

8. System for operating an electrical energy supply network (10) having a subnetwork (13a) which has electrical loads (L) and/or electrical sources (S),
**characterized in that**

- the system has a decentralized control device (21) according to either of Claims 6 and 7; and
- the system has a decentralized data processing device (40) which is configured, in order to train the artificial neural network (32) of the state estimation device (30) of the decentralized control device (21), to train a second artificial neural network (41), the structure of which corresponds to that of the artificial neural network (32) of the state estimation device (30), using historical input signals and associated state values with the formation of training parameters which determine the behaviour of the second artificial neural network (41).

**Revendications**

1. Procédé pour faire fonctionner un réseau (10) d'alimentation en énergie électrique, ayant un réseau (13a) partiel, comportant des charges (L) électriques et/ou des sources (S) électriques, dans lequel, dans le procédé

- au réseau (13a) partiel est associé un dispositif (21) de commande décentralisé, au moyen duquel, en utilisant des valeurs d'état, qui indiquent un état de fonctionnement électrique en cours du réseau (13a) partiel, on produit des signaux de commande, dont on tire parti pour commander des composants du réseau (13a) partiel, dans lequel
- le dispositif (21) de commande décentralisé comprend un dispositif (30) d'estimation d'état, au moyen duquel on estime les valeurs d'état en utilisant des signaux d'entrée envoyés par le dispositif d'estimation d'état ;
- le dispositif (21) de commande décentralisé comprend un dispositif (31) d'exploitation, au moyen duquel on contrôle les valeurs d'état sur le point de savoir si elles indiquent un état de fonctionnement électrique non souhaité du réseau (13a) partiel du réseau (10) d'alimentation en énergie, et on produit un signal de commande si les valeurs d'état indiquent un état de fonctionnement électrique non souhaité ; **caractérisé en ce que**

- on envoie au dispositif (30) d'estimation d'état des signaux d'entrée, qui indiquent un état ambiant présent dans la partie du réseau (13a) partiel, dans lequel

- on utilise comme signaux d'entrée un ou plusieurs des signaux suivants :

- un signal d'intempérie indiquant l'intempérie en cours dans la partie du réseau (13a) partiel ;
- un signal de temps indiquant l'heure en cours ;
- un signal de type de jour indiquant le type du jour en cours ;

et

- le dispositif (30) d'estimation d'état comprend un réseau (32) neuronal artificiel, qui subit un apprentissage, de manière à déterminer les valeurs d'état en utilisant les signaux d'entrée.

**2.** Procédé suivant la revendication 1, **caractérisé en ce que**

- l'on utilise, comme signaux d'entrée, en outre, au moins l'un des signaux suivants :
- un signal de mesure indiquant un ou plusieurs électriques mesurées dans le réseau (13a) partiel ;
- un signal d'état de commutation indiquant un état de commutation de dispositif (22) de commutation dans le réseau (13a) partiel.

**3.** Procédé suivant la revendication 1 ou 2, **caractérisé en ce que**

- l'on détermine, comme valeur d'état sur les nœuds du réseau (13a) partiel, des tensions aux nœuds présentes en cours et/ou des courants en cours présents sur les lignes du réseau (13a) partiel.

**4.** Procédé suivant l'une des revendications précédentes, **caractérisé en ce que**

- pour faire subir un apprentissage au réseau (32) neuronal artificiel, on fait subir un apprentissage en formant des paramètres d'apprentissage à un deuxième réseau (41) neuronal artificiel, dont la structure coïncide avec celle du réseau (32) neuronal artificiel du dispositif (30) d'estimation d'état, dans un dispositif (40) central de traitement des données, en utilisant des signaux d'entrée historiques et des valeurs d'état associées, en formant des paramètres d'apprentissage, qui déterminent le comportement du deuxième réseau (41) neuronal artificiel ; et

- les paramètres d'apprentissage sont transmis au réseau (32) neuronal artificiel du dispositif (30) d'estimation d'état et sont pris en charge par celui-ci.

**5.** Procédé suivant la revendication 4, **caractérisé en ce que**

- le dispositif (21) de commande compare, au moyen du dispositif (32) d'estimation d'état, des valeurs d'état déterminées à des paramètres électriques mesurés pour des points de mesure sélectionnés du réseau (13a) partiel ; et
- s'il y a un état dépassant une valeur de seuil de tolérance entre les valeur d'état et les paramètres électriques, il est effectué un apprentissage renouvelé du réseau (32) neuronal artificiel du dispositif (30) d'estimation d'état.

**6.** Dispositif (21) de commande décentralisé pour faire fonctionner un réseau (13a) partiel ayant des charges (L) électriques et/ou des sources (S) électriques d'un réseau (10) d'alimentation en énergie électrique, dans lequel

- le dispositif (21) de commande décentralisé est associé au réseau (13a) partiel et est conçu pour produire, en utilisant des valeurs d'état, qui indiquent un état de fonctionnement électrique en cours du réseau (13a) partiel, des signaux de commande, qui sont mis à profit pour commander des composants du réseau (13a) partiel ;
- le dispositif (21) de commande comprend un dispositif (30) d'estimation d'état conçu pour estimer les valeurs d'état en utilisant des signaux d'entrée envoyés par le dispositif (30) d'estimation d'état ; et
- le dispositif (21) de commande comprend un dispositif (31) d'exploitation, conçu pour contrôler les valeurs d'état sur le point de savoir si elles indiquent un état de fonctionnement électrique non souhaité du réseau (13a) partiel du réseau (10) d'alimentation en énergie, et pour produire un signal de commande si les valeurs d'état indiquent un état de fonctionnement électrique non souhaité ; **caractérisé en ce que**
- le dispositif (30) d'estimation d'état est conçu pour, en utilisant de signaux d'entrée, qui indiquent un état ambiant présent dans la partie du réseau (13a) partiel, dans lequel
- on utilise, comme signaux d'entrée, un ou plusieurs des signaux suivants :
- un signal d'intempérie indiquant l'intempérie en cours dans la partie du réseau (13a) partiel ;
- un signal de temps indiquant l'heure en cours ;

- un signal de type de jour indiquant le type du jour en cours ;
déterminer les valeurs d'état, dans lequel

- le dispositif (30) d'estimation d'état comprend un réseau (32) neuronal artificiel, qui subit un apprentissage pour déterminer les valeurs d'état en utilisant les signaux d'entrée.

7. Dispositif (31) de commande décentralisé suivant la revendication 6,
**caractérisé en ce que**

- le dispositif (21) de commande est une partie constitutive d'un poste (20) de réseau local associée au réseau (13a) partiel.

8. Système pour faire fonctionner un réseau (10) d'alimentation en énergie électrique, comprenant un réseau (13a) partiel ayant des charges (L) électriques et/ou des sources (S) électriques,
**caractérisé en ce que**

- le système a un dispositif (21) de commande décentralisé suivant l'une des revendications 6 ou 7 ; et
- le système a un dispositif (40) central de traitement de données, qui est conçu, pour l'apprentissage du réseau (32) neuronal artificiel du dispositif (30) d'estimation de données du dispositif (21) de commande décentralisé, pour faire subir un apprentissage à un deuxième réseau (41) neuronal artificiel, dont la structure coïncide avec celle du réseau (32) neuronal artificiel du dispositif (30) d'estimation d'état, en utilisant des signaux d'entrée historiques et des valeurs d'état associées, en formant des paramètres d'apprentissage, qui déterminent le comportement du deuxième réseau (41) neuronal artificiel.

FIG 1

FIG 2

FIG 3

# FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 2521237 A1

**In der Beschreibung aufgeführte Nicht-Patentliteratur**

• **M. HURTGEN ; J.-C. MAUN.** Advantages of Power System State Estimation Using Phasor Measurement Units. *16th Power Systems Computation Conference (PSCC,* 2008

• **C. OERTER ; N. NEUSEL-LANGE.** LV-Grid Automation System - A Technology Review. *IEEE PES General Meeting, beschrieben,* 2014